# EUROPEAN PATENT APPLICATION

(11) **EP 2 840 263 A1**
(43) Date of publication of application: **25.02.2015**
(21) Application number: 13763900.1
(22) Date of filing: 18.03.2013
(51) Int. Cl.: F15B 15/14, F16K 7/17, F16K 31/122

(54) **PISTON-FORMAT WORKING-FLUID-PRESSURE ACTUATOR AND CONTROL VALVE**

(30) Priority: 23.03.2012 JP 2012068106
(71) Applicant: Asahi Organic Chemicals Industry Co., Ltd., Nobeoka-shi, Miyazaki 882-8688 (JP)
(72) Inventor: KAI, Norimitsu, Nobeoka-shi Miyazaki 882-8688 (JP); SUENAGA, Hiroshi, Nobeoka-shi Miyazaki 882-8688 (JP)
(74) Representative: Reichert, Werner Franz
(86) International application number: PCT/JP2013/057682
(87) International publication number: WO 2013/141212

(57) **Abstract**

[Problem] To provide a piston-format working-fluid-pressure actuator capable of commonly using components when the piston-format working-fluid-pressure actuator is used for a reverse action or a normal action and decreasing a length dimension in the forward/backward movement direction of the output shaft and to provide a control valve using the piston-format working-fluid-pressure actuator and a valve member.

[Solution] A piston-format working-fluid-pressure actuator (10) includes a casing (30) provided with a cylinder chamber (33) by including a cover portion (31) and a body portion (32), an output shaft (40) supported by the casing so as to be movable forward or backward, a piston (50) attached to the output shaft and defining the cylinder chamber, a spring member (60) applying an elastic force of moving the output shaft to the piston, and a working-fluid supply opening (70) supplying a working fluid. The piston includes an accommodating recess (51) accommodating the spring member and is attachable to the output shaft so that an opening (52) of the accommodating recess is selectively directed toward the cover portion or the body portion.

## Description

### TECHNICAL FIELD

The present invention relates to a piston-format working-fluid-pressure actuator and a control valve using the piston-format working-fluid-pressure actuator and a valve member.

### BACKGROUND ART

Various control valves are disposed in the course of a pipe through which a gas or a liquid flows in order to adjust a pressure or a flow rate. The control valve includes a piston-format working-fluid-pressure actuator which is operated by a fluid pressure of a working fluid such as air or oil and a valve member that includes a valve body opening or closing a flow channel. An output shaft of the piston-format working-fluid-pressure actuator is connected to the valve body of the valve member. As the action type of the piston-format working-fluid-pressure actuator, a backward action type only using a working fluid pressure or a reverse or normal action type using an elastic force of a spring is known. The "reverse action type" is a type that opens the valve body by moving the output shaft up through the supply of the working fluid pressure, and the "normal action type" is a type that closes the valve body by moving the output shaft down through the supply of the working fluid pressure.

The piston-format working-fluid-pressure actuator includes a casing which is provided with a cylinder chamber by including a cover portion and a body portion and an output shaft which is supported by the casing so as to be movable forward or backward. A piston which defines the cylinder chamber into two compartments is attached to the output shaft. In the piston-format working-fluid-pressure actuator for the reverse action or the normal action, a spring member such as a compression coil spring is disposed between the piston and the casing so as to apply an elastic force of moving the output shaft to the piston. Further, in order to apply a force of moving the output shaft to the piston against the elastic force applied from the spring member, the casing is provided with a working-fluid supply opening which supplies the working fluid into the cylinder chamber.

In order to commonly use the casing regardless of the different action type of the piston-format working-fluid-pressure actuator, each of the cover portion and the body portion of the casing is provided with a recess having a hole shape or a groove shape accommodating the spring member. Then, in the case of the casing in which the cover portion is provided in the upper portion of the body portion, the spring member is accommodated in the recess of the body portion during the normal action, and the spring member is accommodated in the recess of the cover portion during the reverse action (see Patent Literature 1).

### Citation List

### Patent Literatures

Patent Literature 1: JP 2006-329333 A

### SUMMARY OF INVENTION

### Technical Problem

However, since each of the cover portion and the body portion is provided with the recess accommodating the spring member, the length dimension (hereinafter, referred to as the "height dimension") in the forward/backward movement direction of the output shaft increases in the piston-format working-fluid-pressure actuator. For example, when the springmember is accommodated in the recess of the cover portion in order to change the action type of the piston-format working-fluid-pressure actuator to the reverse action type, the height dimension of the piston-format working-fluid-pressure actuator increases by the depth dimension of the recess of the body portion.

The invention is made in view of the above-described circumstances, and an object thereof is to provide a piston-format working-fluid-pressure actuator capable of commonly using components when the piston-format working-fluid-pressure actuator is used for a reverse action or a normal action and decreasing a length dimension in the forward/backward movement direction of the output shaft and to provide a control valve using the piston-format working-fluid-pressure actuator and a valve member.

### Means for Solving Problem

The above-described object is attained by the following means.
(1) A piston-format working-fluid-pressure actuator including: a casing provided with a cylinder chamber by including first and second casing bodies; an output shaft supported by the casing so as to be movable forward or backward; a piston attached to the output shaft and defining the cylinder chamber; a spring member applying an elastic force of moving the output shaft to the piston; a working-fluid supply opening supplying a working fluid applying a force of moving the output shaft to the piston against the elastic force applied from the spring member; and at least one seal member sealing the leakage of the working fluid, wherein the piston includes an accommodating recess accommodating the spring member and is attachable to the output shaft so that an opening of the accommodating recess is selectively directed toward the first casing body or the second casing body, wherein the output shaft extends so as to penetrate one casing body of the first casing body and the second casing body and is connected to a subj ect operation member, and wherein the piston is disposed so as to establish a relation of L1 = L2 when the distance L1 is a distance between a seating surface connected to the output shaft and a contact surface contacting one casing body during a reverse action and the distance L2 is a distance between a seating surface connected to the output shaft and a contact surface contacting one casing body during a normal action.
(2) A control valve including: the piston-format working-fluid-pressure actuator of (1); and a valve member including a valve body opening or closing a flow channel, wherein the output shaft of the piston-format working-fluid-pressure actuator is connected to the valve body of the valve member, and wherein when the piston is attached to the output shaft so that the opening of the accommodating recess is selectively directed toward the first casing body or the second casing body, the valve member is operated as a reverse acting valve in which the valve body is opened by the working fluid supplied from the working-fluid supply opening or a normal acting valve in which the valve body is closed by the working fluid supplied from the working-fluid supply opening.

### Advantageous Effect of the Invention

According to the invention, since the piston includes the accommodating recess accommodating the spring member and is attachable to the output shaft so that the opening of the accommodating recess is selectively directed toward the cover portion or the body portion, it is possible to commonly use the components (at least the casing, the output shaft, and the piston) when the piston-format working-fluid-pressure actuator is used for the reverse action or the normal action. Further, since the accommodation space for the spring member disposed for the reverse action and the accommodation space for the spring member disposed for the normal action may be commonly used, it is possible to decrease the length dimension (the height dimension) of the piston-format working-fluid-pressure actuator in the forward/backward movement direction of the output shaft compared to the case where each of the cover portion and the body portion is provided with the recess accommodating the spring member. Accordingly, it is possible to provide the piston-format working-fluid-pressure actuator capable of commonly using the components when the piston-format working-fluid-pressure actuator is used for the reverse action or the normal action and decreasing the length dimension (the height dimension) in the forward/backwardmovement direction of the output shaft. Since the piston is disposed so that the equation of the distance L1 = the distance L2 is established, the output shaft may be used for both the reverse action and the normal action.

Further, the control valve is configured by connecting the output shaft of the piston-format working-fluid-pressure actuator to the valve body of the valve member. Since the piston is attached to the output shaft so that the opening of the accommodating recess is selectively directed toward the cover portion or the body portion, the valve member may be operated as the reverse acting valve in which the valve body is opened by the air supplied from the working-fluid supply opening or the normal acting valve in which the valve body is closed by the air supplied from the working-fluid supply opening. Accordingly, it is possible to decrease the size of the control valve by decreasing the size of the piston-format working-fluid-pressure actuator.

Further, the backward acting valve which is opened or closed by the air supplied from the working-fluid supply opening may be provided by separating the spring member from the reverse acting valve or the normal acting valve.

### BRIEF DESCRIPTION OF DRAWINGS

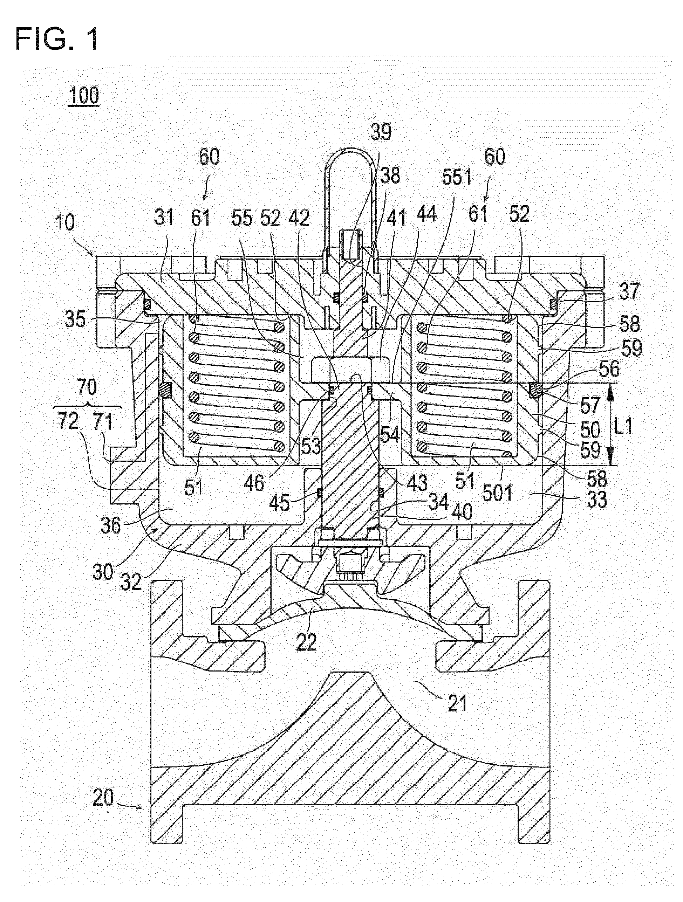

Fig. 1 is a cross-sectional view illustrating the configuration of a control valve including a piston-format working-fluid-pressure actuator and a valve member according to an embodiment and is a view illustrating a state where a working fluid is supplied to the piston-format working-fluid-pressure actuator (a state where a valve body is opened) in a case where the valve member is operated as a reverse acting valve.

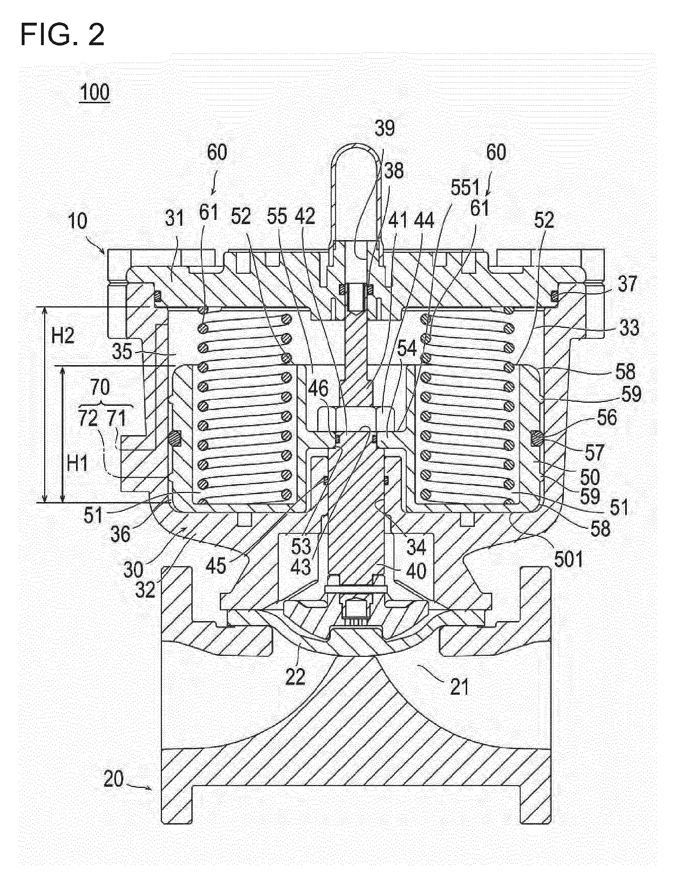

Fig. 2 is a cross-sectional view illustrating the configuration of the control valve including the piston-format working-fluid-pressure actuator and the valve member according to the embodiment and is a view illustrating a state where the working fluid is not supplied to the piston-format working-fluid-pressure actuator (a state where the valve body is closed) in a case where the valve member is operated as the reverse acting valve.

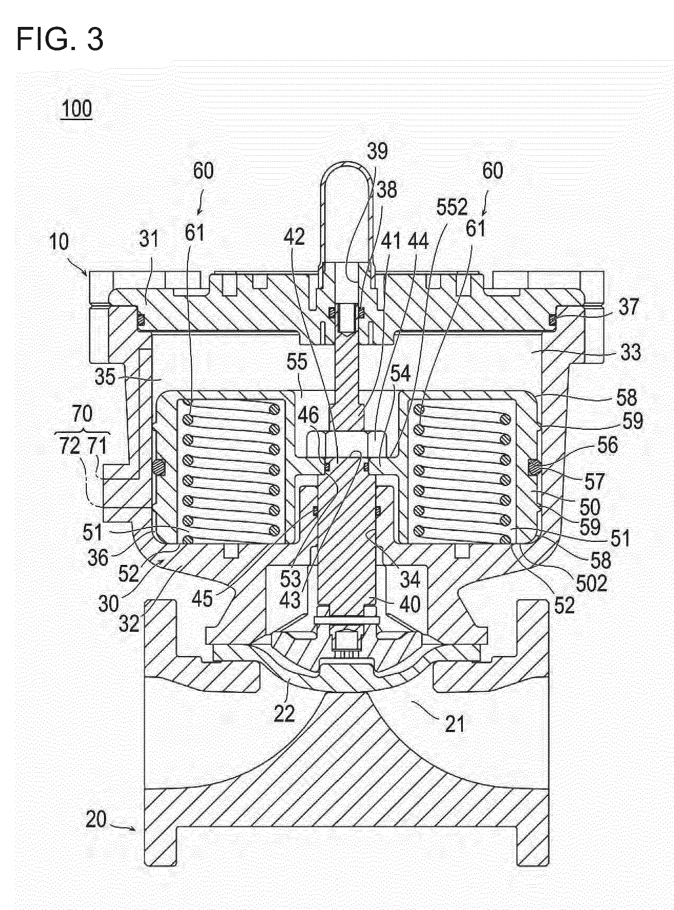

Fig. 3 is a cross-sectional view illustrating the configuration of the control valve including the piston-format working-fluid-pressure actuator and the valve member according to the embodiment and is a view illustrating a state where the working fluid is supplied to the piston-format working-fluid-pressure actuator (a state where the valve body is closed) in a case where the valve member is operated as a normal acting valve.

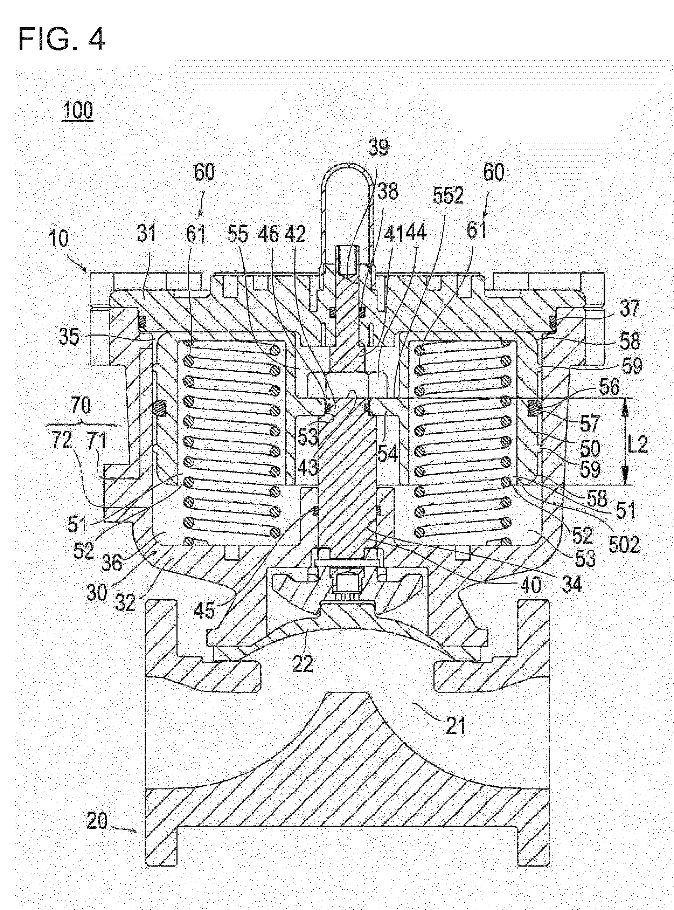

Fig. 4 is a cross-sectional view illustrating the configuration of the control valve including the piston-format working-fluid-pressure actuator and the valve member according to the embodiment and is a view illustrating a state where the working fluid is not supplied to the piston-format working-fluid-pressure actuator (a state where the valve body is opened) in a case where the valve member is operated as the normal acting valve.

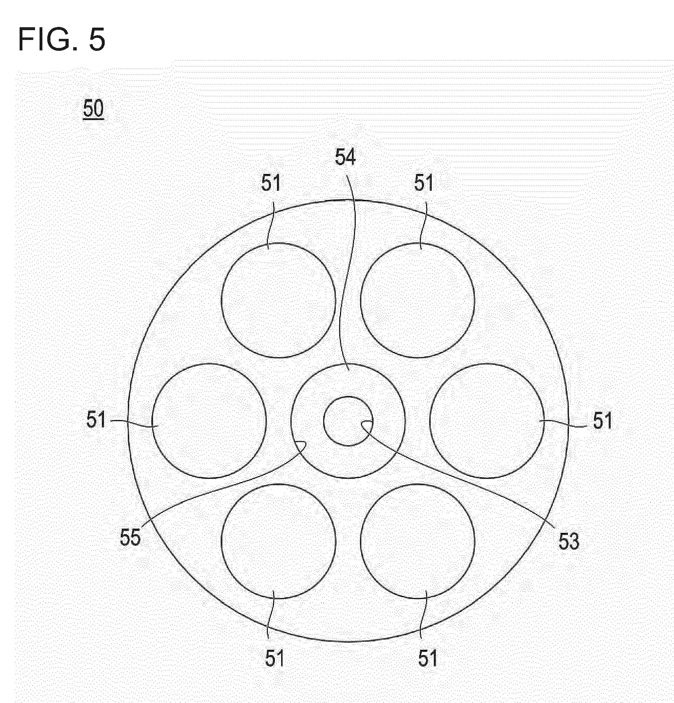

Fig. 5 is a top view illustrating a piston.

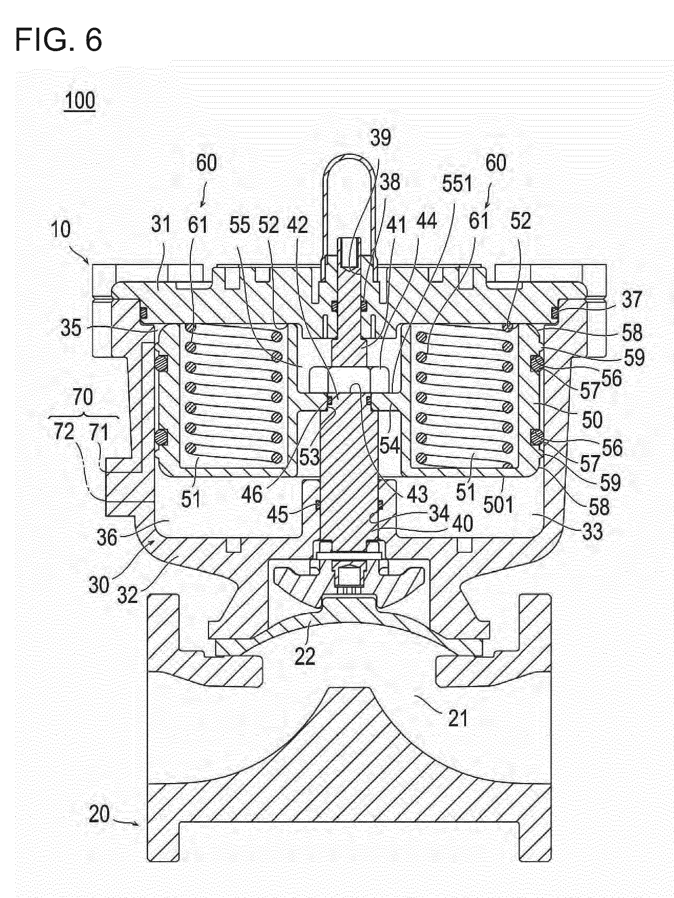

Fig. 6 is a cross-sectional view illustrating the configuration of the control valve including the piston-format working-fluid-pressure actuator and the valve member according to the embodiment and is a view illustrating a state where the working fluid is supplied to the piston-format working-fluid-pressure actuator (a state where the valve body is opened) in a case where a plurality of seal members is disposed in the piston and the valve member is operated as the reverse acting valve.

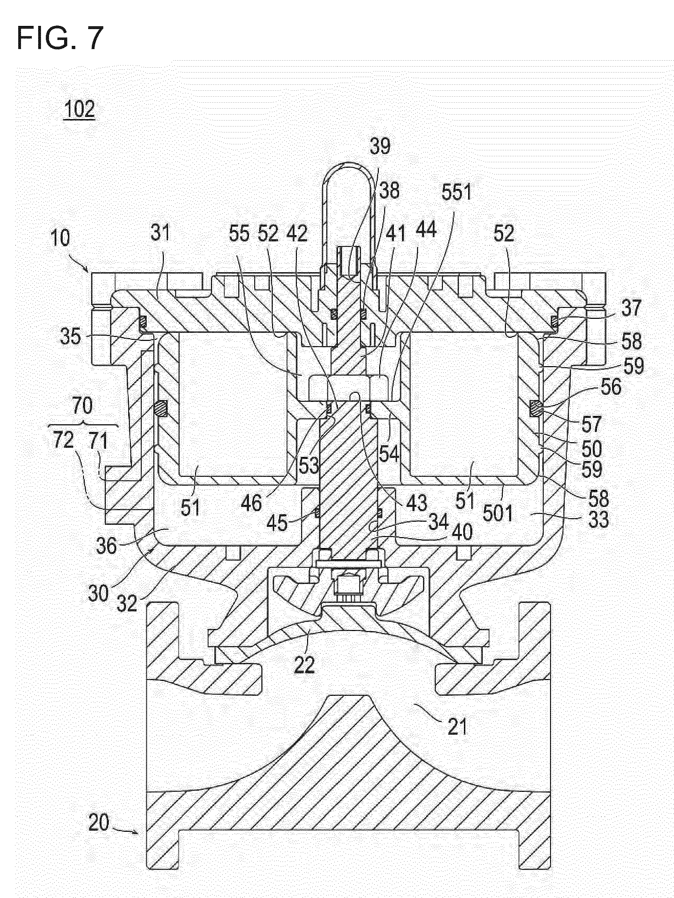

Fig. 7 is a cross-sectional view illustrating the configuration of a control valve including a piston-format working-fluid-pressure actuator and a valve member according to the other variant and is a view illustrating a state where a working fluid is supplied to the piston-format working-fluid-pressure actuator and a valve body is opened in a case where the valve member is operated as a backward acting valve.

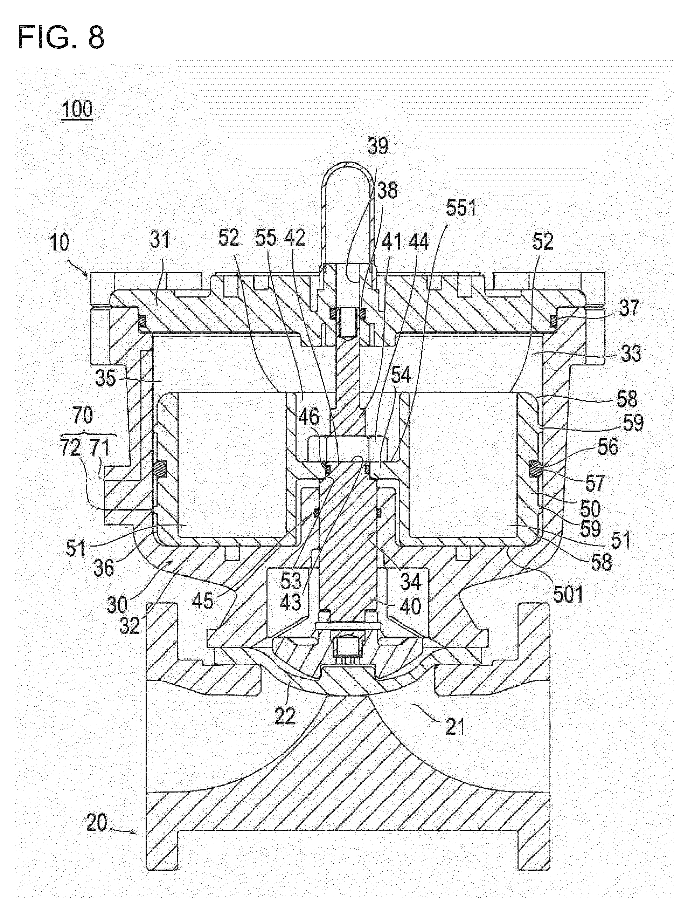

Fig. 8 is a cross-sectional view illustrating the configuration of the control valve including the piston-format working-fluid-pressure actuator and the valve member according to the other variant and is a view illustrating a state where the working fluid is supplied to the piston-format working-fluid-pressure actuator and the valve body is closed in a case where the valve member is operated as the backward acting valve.

### DESCRIPTION OF EMBODIMENTS

Hereinafter, an embodiment of the invention will be described. Furthermore, the description in this section does not limit the technical scopes or the meanings of the terms of claims.

### (Embodiment)

Figs. 1 and 2 are cross-sectional views illustrating the configuration of a control valve 100 including a piston-format working-fluid-pressure actuator 10 and a valve member 20 according to an embodiment, and are views illustrating a case where the valve member 20 is operated as a reverse acting valve. Fig. 1 illustrates a state (a state where a valve body 22 is opened) where a working fluid is supplied to the piston-format working-fluid-pressure actuator 10, and Fig. 2 illustrates a state (a state where the valve body 22 is closed) where the working fluid is not supplied to the piston-format working-fluid-pressure actuator 10. Further, Figs. 3 and 4 are views illustrating a case where the valve member 20 is operated as a normal acting valve. Fig. 3 illustrates a state (a state where the valve body 22 is closed) where the working fluid is supplied to the piston-format working-fluid-pressure actuator 10, and Fig. 4 illustrates a state (a state where the valve body 22 is opened) where the working fluid is not supplied to the piston-format working-fluid-pressure actuator 10. Fig. 5 is a top view illustrating a piston 50.

Referring to Figs. 1 to 4, the control valve 100 includes the piston-format working-fluid-pressure actuator 10 which is operated by a working fluid pressure of a working fluid such as air or oil and the valve member 20 which includes the valve body 22 opening or closing a flow channel 21. An output shaft 40 of the piston-format working-fluid-pressure actuator 10 is connected to the valve body 22 of the valve member 20.

Specifically, the piston-format working-fluid-pressure actuator 10 includes a casing 30 which is provided with a cylinder chamber 33 by including a cover portion 31 (corresponding to a first casing body) and a body portion 32 (corresponding to a second casing body), the output shaft 40 which is supported by the casing 30 so as to be movable forward or backward, the piston 50 which is attached to the output shaft 40 so as to define the inside of the cylinder chamber 33 into two compartments, a spring member 60 which applies an elastic force of moving the output shaft 40 to the piston 50, a working-fluid supply opening 70 which supplies a working fluid applying a force of moving the output shaft 40 against the elastic force applied from the spring member 60 to the piston 50, and seal members 37, 38, 45, 46, and 57 which seals the leakage of the working fluid. The piston 50 includes an accommodating recess 51 which accommodates the spring member 60 and is attachable to the output shaft 40 by selectively directing an opening 52 of the accommodating recess 51 toward the cover portion 31 or the body portion 32. In the control valve 100, the piston is attached to the output shaft 40 by selectively directing the opening 52 of the accommodating recess 51 toward the cover portion 31 or the body portion 32. Accordingly, the valve member 20 is operated as a reverse acting valve in which the valve body 22 is opened by the working fluid supplied from a second port 72 of the working-fluid supply opening 70 or a normal acting valve in which the valve body 22 is closed by the working fluid supplied from a first port 71 of the working-fluid supply opening 70. In the embodiment, compressed air is used as the working fluid. Hereinafter, this configuration will be described in detail.

The casing 30 includes the body portion 32 which is provided with a recessed position and the cover portion 31 which is provided at the upper portion of the body portion 32. The cylinder chamber 33 is formed by covering the upper opening of the body portion 32 by the cover portion 31. The external shape of the casing 30 substantially has a cylindrical shape. Center holes 34 and 39 penetrate the center portion of the casing 30. The seal member 37 such as an O-ring which seals the leakage of air from the cylinder chamber 33 is provided in a portion contacting the cover portion 31.

The output shaft 40 is supported inside the center holes 34 and 39 of the casing 30 so as to be movable forward or backward. The seal member 45 such as an O-ring which seals the leakage of air from the cylinder chamber 33 is provided between the output shaft 40 and the body portion 32. The seal member 38 such as an O-ring which seals the leakage of air from the cylinder chamber 33 is provided between the output shaft 40 and the cover portion 31. In the embodiment, the O-ring groove is provided in each of the body portion 32 and the cover portion 31, but may be provided in the output shaft 40. The output shaft 40 includes a small-diameter portion 41 and a large-diameter portion 42, and a stepped portion 43 is provided between the small-diameter portion 41 and the large-diameter portion 42. The piston 50 is supported by the stepped portion 43. A male screw is formed in the outer peripheral surface of the small-diameter portion 41, and a nut 44 is threaded thereinto.

An attachment hole 53 penetrates the center portion of the piston 50. The piston 50 is supported by the stepped portion 43 of the output shaft 40 by inserting the output shaft 40 through the attachment hole 53. The piston 50 and the output shaft 40 are connected to each other by threading the nut 44 into the male screw of the small-diameter portion 41. The nut 44 corresponds to a connection member that connects the piston 50 and the output shaft 40 to each other. The cylinder chamber 33 is divided into two compartments, that is, a first chamber 35 which is illustrated at the upper side of the drawing in relation to the piston 50 and a second chamber 36 which is illustrated at the lower side of the drawing in relation to the piston 50. The seal member 46 such as an O-ring which seals the leakage of air between the first chamber 35 and the second chamber 36 is provided between the output shaft 40 and the piston 50. In the embodiment, the O-ring groove is provided in the output shaft 40, but may be provide in the piston 50.

The external shape of the piston 50 substantially has a cylindrical shape. The piston 50 includes a plurality of the accommodating recesses 51 which accommodate the spring member 60. Each accommodating recess 51 has a bottomed circular hole shape. Referring to Fig. 5, six accommodating recesses 51 are formed at the equal interval in the circumferential direction of the piston 50 illustrated in the drawing. The piston may be attached to the output shaft 40 by selectively directing the opening 52 of the accommodating recess 51 toward the cover portion 31 or the body portion 32 in a manner such that the front and rear surfaces of the piston 50 are inverted and the output shaft 40 is inserted through the attachment hole 53. Figs. 1 and 2 illustrate a state where the piston is attached to the output shaft 40 by directing the opening 52 of the accommodating recess 51 toward the cover portion 31, and Figs. 3 and 4 illustrate a state where the piston is attached to the output shaft 40 by directing the opening 52 of the accommodating recess 51 toward the body portion 32.

Referring to Fig. 2, the depth H1 of the accommodating recess 51 is set to a depth equal to or larger than 50% and equal to or smaller than 70% with respect to the height H2 of the spring which is assembled as the piston-format working-fluid-pressure actuator 10 and is set when air is not supplied thereto. When the depth is equal to or larger than 50%, the buckling or the bending of compression coil springs 61 may be prevented by inserting a compression coil spring 61 into the accommodating recess 51 of the piston 50, and hence a stable thrust force may be obtained. Further, the interference between the adjacent compression coil springs 61 may be prevented and abnormal noise is suppressed. Accordingly, a compact actuator may be provided. Further, when the depth is equal or smaller than 70%, the operation length necessary for opening or closing the valve maybe easily obtained.

A center plate 54 which is provided with the attachment hole 53 and to which the output shaft 40 is connected is substantially disposed at the central position of the piston 50 in the height direction. The nut 44 which serves as a connection means, that is, a means for connecting the output shaft 40 to the center plate 54 does not protrude toward one side of the piston 50 in the height direction, and hence the size of the piston 50 in the height direction may be decreased.

The output shaft 40 extends so as to penetrate one casing body among the first casing body and the second casing body, that is, the body portion 32, and is connected to a subject operation member, that is, the valve body 22. The piston 50 is disposed so that the relation of L1 = L2 is established when the distance L1 (see Fig. 1) is a distance between a contact surface 501 of the piston 50 contacting the body portion 32 and a seating surface 551 of a depressed portion 55 connecting the piston 50 to the output shaft 40 by the nut 44 during the reverse action and the distance L2 (see Fig. 4) is a distance between a contact surface 502 of the piston 50 contacting the body portion 32 and a seating surface 552 connecting the piston 50 to the output shaft 40 by the nut 44 during the normal action. Accordingly, the output shaft 40 may be used in both the reverse action and the normal action.

The center plate 54 is substantially disposed at the central position of the piston 50 in the height direction, and is disposed so as to establish the relation of L1 = L2, thereby further compactly designing the size in the height direction.

The diameter of the center plate 54 is larger than that of the nut 44. The depth from the end of the accommodating recess 51 in the height direction to the center plate 54 is larger than the height of the nut 44. Thus, the piston 50 is provided with the depressed portion 55 which accommodates the nut 44 as a connection member.

In the embodiment, the nut 44 is used as the connection member. However, as the connectionmember, a C-type snap ring, an E-type snap ring, a parallel pin, a taper pin, a grooved spring pin, a split pin, or the like may be employed as long as the piston 50 and the output shaft 40 may be fixed to each other by the connectionmember. That is, the connection member is appropriately designed by a necessary thrust force, the number of operation times, and the like.

The spring member 60 is formed as, for example, a compression coil spring. Referring to Figs. 1 and 2, the spring member 60 which is disposed in the first chamber 35 applies an elastic force of moving the output shaft 40 in the downward direction of the drawing to the piston 50. Further, referring to Figs. 3 and 4, the spring member 60 which is disposed in the second chamber 36 applies an elastic force of moving the output shaft 40 in the upward direction of the drawing to the piston 50.

The working-fluid supply opening 70 includes the first port 71 which communicates with the first chamber 35 and the second port 72 which communicates with the second chamber 36. When air is supplied to the second chamber 36 by connecting the second port 72 to a working fluid supply source, a force of moving the output shaft 40 in the upward direction of the drawing is applied to the piston 50 against the elastic force applied by the spring member 60 (see Fig. 1). When air is supplied to the first chamber 35 by connecting the first port 71 to a working fluid supply source, a force of moving the output shaft 40 in the downward direction of the drawing is applied to the piston 50 against the elastic force applied by the spring member 60 (see Fig. 3).

A ring groove 56 is formed in the outer peripheral surface of the piston 50. A seal member that seals the leakage of air is attached to the ring groove 56. The seal member is, for example, the O-ring 57. Furthermore, the ring groove may be formed in the inner surface of the cylinder chamber 33, and the seal member may be attached to the ring groove. A plurality of seal members may be disposed if necessary.

The piston 50 includes a rib 59. The rib 59 is provided as a pair of ribs, and is provided at two separated positions in both ends in the height direction. The O-ring 57 such as a seal member that seals the leakage of air is attached between the pair of ribs 59. The dimension of the rib 59 protruding from the outer peripheral surface of the piston 50 is set to a dimension smaller than the dimension when the O-ring 57 is attached thereto. Since the ribs 59 are respectively provided at both ends in the height direction so as to be separated from each other, it is possible to suppress the piston 50 from partially contacting the inner surface of the cylinder chamber 33 when the piston slides on the inner surface of the cylinder chamber 33. As the shape of the rib, a semi-circular shape, a trapezoid shape, a triangular shape, or the like which protrudes in the cylinder direction may be exemplified.

Even when the seal member is disposed at two separate positions of the outer peripheral surface of the piston 50, the partial contact of the piston 50 may be suppressed. In order to prevent the partial contact, any one of or both the seal member and the rib 59 may be appropriately provided depending on the required specifications or the like (see Fig. 6).

The piston 50 serves as a stopper which limits the movement of the output shaft 40 while contacting the inner surface of the cover portion 31 or the body portion 32. When the valve member 20 is operated as the reverse acting valve, the surface (the front surface of the piston 50) near the opening 52 of the accommodating recess 51 contacts the cover portion 31 so as to limit the movement of the output shaft 40 in the upward direction of the drawing (see Fig. 1), and the bottom side surface (the rear surface of the piston 50) of the accommodating recess 51 contacts the body portion 32 so as to limit the movement of the output shaft 40 in the downward direction of the drawing (see Fig. 2). When the valve member 20 is operated as the normal acting valve, the front surface of the piston 50 contacts the body portion 32 so as to limit the movement of the output shaft 40 in the downward direction of the drawing (see Fig. 3), and the rear surface of the piston 50 contacts the cover portion 31 so as to limit the movement of the output shaft 40 in the upward direction of the drawing (see Fig. 4). Since the upward or downward movement is limited, an excessive force is not applied to the valve body 22, and hence the product lifetime of the valve body 22 maybe increased. Then, since the contact surfaces 501 and 502 as the end surfaces of the piston 50 widely come into plane-contact with the cover portion 31 or the body portion 32, the concentration of stress is suppressed. Accordingly, a material may be decreased in thickness or a synthetic resin or the like maybe used. Further, a useless space is not provided in the cover portion 31 or the body portion 32, and hence a compact actuator may be provided.

In the piston 50, a portion which contacts the cover portion 31 or the body portion 32 is formed as a rounded portion 58 having a round shape. In the embodiment, the portion contacting the cover portion 31 or the body portion 32 in the piston 50 is formed in a round shape, but may be chamfered. When the piston serves as the stopper, it is possible to alleviate a state where the stress acting on the piston 50 is intensively applied to the edge, and hence to improve the durability of the piston 50.

An elastic force which is applied from the spring member 60 to the piston 50 when the opening 52 of the accommodating recess 51 is directed toward the cover portion 31 is different from an elastic force which is applied from the spring member 60 to the piston 50 when the opening 52 of the accommodating recess 51 is directed toward the body portion 32. This is because an elastic force suitable for the action type of the piston-format working-fluid-pressure actuator 10 is applied. When the valve member 20 is operated as the reverse acting valve, the valve body 22 is closed by the elastic force of the spring member 60 (see Fig. 2). Compared to the case where the valve member 20 is operated as the normal acting valve, the spring member 60 of the piston-format working-fluid-pressure actuator 10 requires a large elastic force.

The elastic force which is applied from the spring member 60 to the piston 50 maybe appropriately adjusted by increasing the number of types of the spring members (having different materials, diameters, and the like). However, the embodiment has the following configuration so as to commonly use the spring member 60.

The spring member 60 includes the same compression coil springs 61. Then, the number of the compression coil springs 61 disposed when the opening 52 of the accommodating recess 51 is directed toward the cover portion 31 is set to be different from the number of the compression coil springs 61 disposed when the opening 52 of the accommodating recess 51 is directed toward the body portion 32. Specifically, when the valve member 20 is operated as the reverse acting valve, the number of the compression coil springs 61 is set to, for example, six. When the valve member 20 is operated as the normal acting valve, the number of the compression coil springs 61 is set to, for example, three. Since the number of the disposed spring members 60 is set so as to be suitable for the action type of the piston-format working-fluid-pressure actuator 10, the spring members 60 may be commonly used, and hence cost may be decreased. In the embodiment, although the number of springs is defined, the diameter, the coil average diameter, the free height, and the spring material of the spring or various combinations of the spring factors are appropriately designed depending on a necessary thrust force, cost, or the like.

Next, the action will be described.

Referring to Figs. 1 and 2, the piston 50 is attached to the output shaft 40 so that the opening 52 of the accommodating recess 51 is directed toward the cover portion 31 when the valve member 20 is operated as the reverse acting valve. The piston 50 is supported by the stepped portion 43 of the output shaft 40. The piston 50 and the output shaft 40 are connected to each other by threading the nut 44 into the male screw of the small-diameter portion 41. The compression coil springs 61 are respectively disposed in the six accommodating recesses 51. The number of the disposed compression coil springs 61 is six. The piston 50 is disposed in the recessed position of the body portion 32, and the cover portion 31 is attached to the upper portion of the body portion 32. The spring member 60 which is disposed in the first chamber 35 applies an elastic force of moving the output shaft 40 in the downward direction of the drawing to the piston 50. Te second port 72 of the working-fluid supply opening 70 is connected to the working fluid supply source.

Referring to Figs. 1 and 2, in the piston 50 to which the elastic force of the spring member 60 (six compression coil springs 61) is applied, the rear surface as the contact surface 501 contacts the body portion 32 until air is supplied to the second chamber 36. Accordingly, the movement of the output shaft 40 in the downward direction of the drawing is limited. The valve body 22 of the valve member 20 closes the flow channel 21 while receiving the elastic force of the spring member 60.

Referring to Fig. 1, when air is supplied from the second port 72 to the second chamber 36, a force of moving the output shaft 40 in the upward direction of the drawing is applied to the piston 50 against the elastic force applied from the spring member 60. The front surface of the piston 50 contacts the cover portion 31. Accordingly, the movement of the output shaft 40 in the upward direction of the drawing is limited. The valve body 22 of the valve member 20 opens the flow channel 21.

Referring to Figs. 3 and 4, when the valve member 20 is operated as the normal acting valve, the piston 50 is attached to the output shaft 40 so that the opening 52 of the accommodating recess 51 is directed toward the body portion 32. The piston 50 is supported by the stepped portion 43 of the output shaft 40. The piston 50 and the output shaft 40 are connected to each other by threading the nut 44 into the male screw of the small-diameter portion 41. The compression coil spring 61 is disposed at every other accommodating recess among the six accommodating recesses 51. The number of the disposed compression coil springs 61 is three. The piston 50 is disposed in the recessed position of the body portion 32, and the cover portion 31 is attached to the upper portion of the body portion 32. The spring member 60 which is disposed in the second chamber 36 applies an elastic force of moving the output shaft 40 in the upward direction of the drawing to the piston 50. The first port 71 of the working-fluid supply opening 70 is connected to the working fluid supply source.

Referring to Fig. 4, in the piston 50 to which the elastic force of the spring member 60 (three compression coil springs 61) is applied, the rear surface thereof contacts the cover portion 31 until air is supplied to the first chamber 35. Accordingly, the movement of the output shaft 40 in the upward direction of the drawing is limited. The valve body 22 of the valve member 20 opens the flow channel 21 while receiving the elastic force of the spring member 60.

Referring to Fig. 3, when air is supplied from the first port 71 to the first chamber 35, a force of moving the output shaft 40 in the downward direction of the drawing is applied to the piston 50 against the elastic force applied from the spring member 60. In the piston 50, the front surface as the contact surface 502 contacts the body portion 32. Accordingly, the movement of the output shaft 40 in the downward direction of the drawing is limited. The valve body 22 of the valve member 20 closes the flow channel 21.

As described above, in the piston-format working-fluid-pressure actuator 10 of the embodiment, the piston 50 includes the accommodating recess 51 accommodating the spring member 60, and is attachable to the output shaft 40 so that the opening 52 of the accommodating recess 51 is selectively directed toward the cover portion 31 or the body portion 32. For this reason, in the case of the piston-format working-fluid-pressure actuator 10 used for the reverse action or the normal action, the components (at least the casing 30, the output shaft 40, and the piston 50) may be commonly used. Further, the accommodation space of the spring member 60 disposed for the reverse action and the accommodation space of the spring member 60 disposed for the normal action may be commonly used. For this reason, the height dimension of the piston-format working-fluid-pressure actuator 10 may be decreased compared to the case where a recess for accommodating the spring member is provided in each of the body portion 32 and the cover portion 31. Accordingly, in the case of the piston-format working-fluid-pressure actuator 10 used for the reverse action or the normal action, the components may be commonly used, and hence the piston-format working-fluid-pressure actuator 10 capable of decreasing the height dimension thereof may be provided. Since the O-rings 37, 38, 45, 46, and 57 as the seal members are provided so as to seal the leakage of air, the piston 50 may be reliably operated by supplying air thereto.

Further, the piston-format working-fluid-pressure actuator 10 further includes the nut 44 as the connection member connecting the piston 50 and the output shaft 40 to each other, and the piston 50 includes the depressed portion 55 accommodating the nut 44. Since the nut 44 does not protrude from the piston 50, there is no need to provide a depressed portion in the cover portion 31 or the body portion 32 so as to prevent the contact with respect to the nut 44, and hence the casing 30 may be easily processed.

Further, an elastic force which is applied from the spring member 60 to the piston 50 when the opening 52 of the accommodating recess 51 is directed toward the cover portion 31 is set to be different from an elastic force which is applied from the spring member 60 to the piston 50 when the opening 52 of the accommodating recess 51 is directed toward the body portion 32. For this reason, it is possible to apply an elastic force suitable for the action type of the piston-format working-fluid-pressure actuator 10.

Here, the spring member 60 includes the same type of compression coil springs 61, and the number of the compression coil springs 61 disposed when the opening 52 of the accommodating recess 51 is directed toward the cover portion 31 is set to be different from the number of the compression coil springs 61 disposed when the opening 52 of the accommodating recess 51 is directed toward the body portion 32. Thus, the spring members 60 may be commonly used, and hence cost may be further decreased. Further, specifications such as a diameter, a coil average diameter, a free height, and a spring material may be changed at any time depending on a necessary thrust force, cost, or the like. Further, various combinations may be employed in order to get a balance of the spring factors.

The piston 50 includes the rib 59 which suppresses the piston from partially contacting the inner surface of the cylinder chamber 33. Accordingly, it is possible to suppress the piston 50 from partially contacting the inner surface of the cylinder chamber 33 when the piston 50 slides on the inner surface of the cylinder chamber 33, and hence to ensure the smooth sliding action of the piston 50.

Even by the configuration in which the seal members are respectively disposed at two separated positions of the outer peripheral surface of the piston 50, it is possible to suppress the piston 50 from partially contacting the inner surface of the cylinder chamber 33 when the piston slides on the inner surface of the cylinder chamber 33, and hence to ensure the smooth sliding action of the piston 50.

Here, in order to suppress the piston 50 from partially contacting the inner surface of the cylinder chamber 33, the seal members are respectively disposed at two separated positions of the outer peripheral surface of the piston 50, and the rib 59 may be provided so as to suppress the piston from partially contacting the inner surface of the cylinder chamber 33.

The piston 50 has a function as the stopper that limits the movement of the output shaft 40 while contacting the cover portion 31 or the body portion 32. There is no need to provide a dedicated stopper, and hence the number of components or processing steps maybe decreased. There is no need to mention that a dedicated stopper may be provided.

Here, the contact surfaces 501 and 502 as the end surfaces of the piston 50 come into plane-contact with the cover portion 31 or the body portion 32. Since the contact surfaces 501 and 502 as the end surfaces of the piston 50 widely come into plane-contact with the cover portion 31 or the body portion 32, the concentration of stress is suppressed. Accordingly, a material may be decreased in thickness or a synthetic resin or the like may be used. Further, a useless space is not provided in the cover portion 31 or the body portion 32, and hence a compact actuator may be provided.

Furthermore, a portion contacting the cover portion 31 or the body portion 32 in the piston 50 is formed in a round shape. In the embodiment, the portion contacting the cover portion 31 or the body portion 32 in the piston 50 is formed in a round shape, but may be chamfered. When the piston serves as the stopper, it is possible to alleviate a state where the stress acting on the piston 50 is intensively applied to the edge, and hence to improve the durability of the piston 50.

The center plate 54 which is provided in the piston 50 and to which the output shaft 40 is connected is disposed at the central position of the piston 50 in the height direction. A means for connecting the output shaft 40 to the center plate 54, for example, the nut 44 does not protrude toward one side of the height direction of the piston 50, and the size of the piston 50 in the height direction may be decreased.

The output shaft 40 extends so as to penetrate one casing body among the first casing body and the second casing body, that is, the body portion 32, and is connected to the subject operation member, that is, the valve body 22. The piston 50 is disposed so that the relation of L1 = L2 is established when the distance L1 is a distance between the contact surface 501 contacting the body portion 32 and the seating surface 551 connected to the output shaft 40 during the reverse action and the distance L2 is a distance between the contact surface 502 contacting the body portion 32 and the seating surface 552 connected to the output shaft 40 during the normal action. In this way, since the piston is disposed so as to establish the relation of the distance L1 = the distance L2, the output shaft 40 may be used in both the reverse action and the normal action.

The depth H1 of the accommodating recess 51 is set to a depth equal to or larger than 50% and equal to or smaller than 70% with respect to the height H2 of the spring which is assembled as the piston-format working-fluid-pressure actuator 10 and is set when a working fluid such as air is not supplied. When the depth is equal to or larger than 50%, the buckling or the bending of compression coil springs 61 may be prevented by inserting a compression coil spring 61 into the accommodating recess 51 of the piston 50, and hence a stable thrust force may be obtained. Further, the interference between the adjacent compression coil springs 61 may be prevented and abnormal noise is suppressed. Accordingly, a compact actuator may be provided. Further, when the depth is equal or smaller than 70%, the operation length necessary for opening or closing the valve maybe easily obtained.

The control valve 100 is configured by connecting the output shaft 40 of the piston-format working-fluid-pressure actuator 10 to the valve body 22 of the valve member 20. Since the piston is attached to the output shaft 40 so that the opening 52 of the accommodating recess 51 is selectively directed toward the cover portion 31 or the body portion 32, the valve member 20 may be operated as the reverse acting valve in which the valve body 22 is opened by the air supplied from the working-fluid supply opening 72 or the normal acting valve in which the valve body 22 is closed by the air supplied from the working-fluid supply opening 71. The control valve 100 may be decreased in size by decreasing the size of the piston-format working-fluid-pressure actuator 10.

### (Other Variant)

A case has been described in which the piston-format working-fluid-pressure actuator 10 is used for the reverse action or the normal action, but the piston-format working-fluid-pressure actuator may be used for a backward action without using the spring members 60 and 90. Figs. 7 and 8 are cross-sectional views illustrating the configuration of a control valve 102 including the piston-format working-fluid-pressure actuator 10 and the valve member 20 according to the other variant, and illustrate a case where the valve member 20 is operated as a backward acting valve. The other variant is different from the embodiment in that the spring member 60 is not used and the piston-format working-fluid-pressure actuator 10 is used for the backward action. The same reference numerals are given to the members and the parts common to the embodiment, and the description thereof will not be presented. Referring to Fig. 7, when air is supplied from the second port 72 of the working-fluid supply opening 70 to the second chamber 36, a force of moving the output shaft 40 in the upward direction of the drawing is applied to the piston 50. The front surface of the piston 50 contacts the cover portion 31. Accordingly, the movement of the output shaft 40 in the upward direction of the drawing is limited. The valve body 22 of the valve member 20 opens the flow channel 21. Referring to Fig. 8, when air is supplied from the first port 71 of the working-fluid supply opening 70 to the first chamber 35, a force of moving the output shaft 40 in the downward direction of the drawing is applied to the piston 50. The rear surface of the piston 50 contacts the body portion 32. Accordingly, the movement of the output shaft 40 in the downward direction of the drawing is limited. The valve body 22 of the valve member 20 closes the flow channel 21. In the embodiment, the piston 50 has the same configuration as the case of the reverse action, but may be operated in the same direction as the case of the normal action. In this way, even when the valve member is used for any one of the piston-format working-fluid-pressure actuators for the reverse action, the normal action, and the backward action, the components (at least the casing 30, the output shaft 40, and the piston 50) may be commonly used, and hence cost may be further decreased.

Further, the valve member 20 is not limited to the example of the drawings. For example, a valve member may be employed which opens or closes the flow channel by rotating a valve body such as a ball valve or a butterfly valve through a rack-and-pinion mechanism interposed between the piston-format working-fluid-pressure actuator 10 and the valve member.

Moreover, the valve member 20 is exemplified as the member driven by the piston-format working-fluid-pressure actuator 10, but the invention is not limited thereto. The piston-format working-fluid-pressure actuator 10 maybe used to drive a member other than the valve member.

As the materials of the cover portion 31, the body portion 32, and the piston 50 of the invention, glass reinforced polypropylene (hereinafter, PPG) or aluminum may be used. However, if the strength or the characteristic required as the actuator is satisfied, polyvinylidene fluoride (hereinafter, PVDF), polyphenylene sulfide (hereinafter, PPS), polytetrafluoroethylene (hereinafter, PTFE), perfluoroalkoxylalkane (hereinafter, PFA), polycyclopentadiene (hereinafter, PDCPD), polyamide (hereinafter, PA), or a synthetic resin obtained by glass-reinforcing the synthetic resins (PVDF, PPS, PTFE, PFA, PDCPD, and PA) may be used. Alternatively, metal such as stainless steel, copper, cast iron, or cast steel may be used.

The materials of the output shaft 40 and the connection member 44 of the invention are not particularly limited as long as any problem in strength does not occur. Examples thereof may be cast iron, cast steel, carbon steel, copper, copper alloy, brass, aluminum, stainless steel, titanium, and the like.

The materials of the seal members 37, 38, 45, 46, and 57 of the invention may be a rubber-like elastic body, and are not particularly limited. Preferably, ethylene-propylene rubber, isoprene rubber, chloroprene rubber, chlorosulfonated rubber, nitrile rubber, styrene-butadiene rubber, chlorinated polyethylene, fluorine-contained rubber, and the like may be exemplified.

The spring members 60 and 90 of the invention may be formed as any known spring steel as long as a necessary thrust force may be obtained. Further, the spring members may be painted or coated by a resin if necessary.

The present application claims priority on Japanese Patent Application No. 2012-68106, filed March 23, 2012, the contents of which are incorporated herein by reference.

### Reference Signs List

- 10:: Piston-format working-fluid-pressure actuator
- 20:: Valve member
- 21:: Flow channel
- 22:: Valve body (subject operation member)
- 30:: Casing
- 31:: Cover portion (first casing body)
- 32:: Body portion (second casing body, one casing body)
- 33:: Cylinder chamber
- 34:: Center hole
- 35:: First chamber
- 36:: Second chamber
- 37:: O-ring (seal member)
- 38:: O-ring (seal member)
- 39:: Center hole
- 40:: Output shaft
- 43:: Stepped portion
- 44:: Nut (connection member)
- 45:: O-ring (seal member)
- 46:: O-ring (seal member)
- 50:: Piston
- 501:: Contact surface
- 502:: Contact surface
- 51:: Accommodating recess
- 52:: Opening of accommodating recess
- 53:: Attachment hole
- 54:: Center plate
- 55:: Depressed portion
- 551:: Seating surface
- 552:: Seating surface
- 56:: Ring groove
- 57:: O-ring (seal member)
- 58:: Rounded portion
- 59:: Rib
- 60:: Spring member
- 61:: Compression coil spring
- 70:: Working-fluid supply opening
- 71:: First port
- 72:: Second port
- 100, 101, 102:: Control valve

## Claims

1. A piston-format working-fluid-pressure actuator comprising:
a casing provided with a cylinder chamber by including first and second casing bodies;
an output shaft supported by the casing so as to be movable forward or backward;
a piston attached to the output shaft and defining the cylinder chamber;
a spring member applying an elastic force of moving the output shaft to the piston;
a working-fluid supply opening supplying a working fluid applying a force of moving the output shaft to the piston against the elastic force applied from the spring member; and
at least one seal member sealing the leakage of the working fluid,
wherein the piston includes an accommodating recess accommodating the springmember and is attachable to the output shaft so that an opening of the accommodating recess is selectively directed toward the first casing body or the second casing body,
wherein the output shaft extends so as to penetrate one casing body of the first casing body and the second casing body and is connected to a subject operation member, and
wherein the piston is disposed so as to establish a relation of L1 = L2 when the distance L1 is a distance between a seating surface connected to the output shaft and a contact surface contacting one casing body during a reverse action and the distance L2 is a distance between a seating surface connected to the output shaft and a contact surface contacting one casing body during a normal action.

2. The piston-format working-fluid-pressure actuator according to claim 1, further comprising:
a connection member connecting the piston and the output shaft to each other,
wherein the piston includes a depressed portion accommodating the connection member.

3. The piston-format working-fluid-pressure actuator according to claim 1 or 2,
wherein an elastic force applied from the spring member to the piston when the opening of the accommodating recess is directed toward the first casing body is different from an elastic force applied from the spring member to the piston when the opening of the accommodating recess is directed toward the second casing body.

4. The piston-format working-fluid-pressure actuator according to any one of claims 1 to 3,
wherein the piston includes a rib suppressing the piston from partially contacting an inner surface of the cylinder chamber.

5. The piston-format working-fluid-pressure actuator according to any one of claims 1 to 3,
wherein the seal member is disposed at two separated positions of an outer peripheral surface of the piston.

6. The piston-format working-fluid-pressure actuator according to any one of claims 1 to 3,
wherein the seal member is disposed at two separated positions of an outer peripheral surface of the piston, and the piston includes a rib suppressing the piston frompartially contacting an inner surface of the cylinder chamber.

7. The piston-format working-fluid-pressure actuator according to any one of claims 1 to 6,
wherein the piston has a function as a stopper limiting the movement of the output shaft while contacting the first casing body or the second casing body.

8. The piston-format working-fluid-pressure actuator according to any one of claims 1 to 7,
wherein a contact surface as an end surface of the piston comes into plane-contact with the first casing body or the second casing body.

9. The piston-format working-fluid-pressure actuator according to any one of claims 1 to 8,
wherein a center plate provided in the piston and to which the output shaft is connected is disposed at a central position of the piston in the height direction.

10. The piston-format working-fluid-pressure actuator according to any one of claims 1 to 9,
wherein a depth H1 of the accommodating recess is a depth equal to or larger than 50% and equal to or smaller than 70% with respect to a height H2 of a spring assembled as the piston-formatworking-fluid-pressure actuator and is set when air is not supplied.

11. A control valve comprising:
the piston-format working-fluid-pressure actuator according to any one of claims 1 to 10; and
a valve member including a valve body opening or closing a flow channel,
wherein the output shaft of the piston-format working-fluid-pressure actuator is connected to the valve body of the valve member, and
wherein when the piston is attached to the output shaft so that the opening of the accommodating recess is selectively directed toward the first casing body or the second casing body, the valve member is operated as a reverse acting valve in which the valve body is opened by the working fluid supplied from the working-fluid supply opening or a normal acting valve in which the valve body is closed by the working fluid supplied from the working-fluid supply opening.

## Amended claims

### Amended claims under Art. 19.1 PCT

**1.** (Amended) A piston-format working-fluid-pressure actuator comprising:
a casing provided with a cylinder chamber by including first and second casing bodies;
an output shaft supported by the casing so as to be movable forward or backward;
a piston attached to the output shaft and defining the cylinder chamber;
a spring member applying an elastic force of moving the output shaft to the piston;
a working-fluid supply opening supplying a working fluid applying a force of moving the output shaft to the piston against the elastic force applied from the spring member; and
at least one seal member sealing the leakage of the working fluid,
wherein the piston includes an accommodating recess accommodating the springmember and is attachable to the output shaft so that an opening of the accommodating recess is selectively directed toward the first casing body or the second casing body,
wherein the output shaft extends so as to penetrate one casing body of the first casing body and the second casing body and is connected to a subject operation member,
wherein the piston is disposed so as to establish a relation of L1 = L2 when the distance L1 is a distance between a seating surface connected to the output shaft and a contact surface contacting one casing body during a reverse action and the distance L2 is a distance between a seating surface connected to the output shaft and a contact surface contacting one casing body during a normal action, and
wherein a center plate provided in the piston and to which the output shaft is connected is disposed at a central position of the piston in the height direction.

**2.** The piston-format working-fluid-pressure actuator according to claim 1, further comprising:
a connection member connecting the piston and the output shaft to each other,
wherein the piston includes a depressed portion accommodating the connection member.

**3.** The piston-format working-fluid-pressure actuator according to claim 1 or 2,
wherein an elastic force applied from the spring member to the piston when the opening of the accommodating recess is directed toward the first casing body is different from an elastic force applied from the spring member to the piston when the opening of the accommodating recess is directed toward the second casing body.

**4.** The piston-format working-fluid-pressure actuator according to any one of claims 1 to 3,
wherein the piston includes a rib suppressing the piston from partially contacting an inner surface of the cylinder chamber.

**5.** The piston-format working-fluid-pressure actuator according to any one of claims 1 to 3,
wherein the seal member is disposed at two separated positions of an outer peripheral surface of the piston.

**6.** The piston-format working-fluid-pressure actuator according to any one of claims 1 to 3,
wherein the seal member is disposed at two separated positions of an outer peripheral surface of the piston, and the piston includes a rib suppressing the piston frompartially contacting an inner surface of the cylinder chamber.

**7.** The piston-format working-fluid-pressure actuator according to any one of claims 1 to 6,
wherein the piston has a function as a stopper limiting the movement of the output shaft while contacting the first casing body or the second casing body.

**8.** The piston-format working-fluid-pressure actuator according to any one of claims 1 to 7,
wherein a contact surface as an end surface of the piston comes into plane-contact with the first casing body or the second casing body.

**9.** (Cancelled)

**10.** (Amended) The piston-format working-fluid-pressure actuator according to any one of claims 1 to 8,
wherein a depth H1 of the accommodating recess is a depth equal to or larger than 50% and equal to or smaller than 70% with respect to a height H2 of a spring assembled as the piston-format working-fluid-pressure actuator and is set when air is not supplied.

**11.** (Amended) A control valve comprising:
the piston-format working-fluid-pressure actuator according to any one of claims 1 to 8 and 10; and
a valve member including a valve body opening or closing a flow channel,
wherein the output shaft of the piston-format working-fluid-pressure actuator is connected to the valve body of the valve member, and
wherein when the piston is attached to the output shaft so that the opening of the accommodating recess is selectively directed toward the first casing body or the second casing body, the valve member is operated as a reverse acting valve in which the valve body is opened by the working fluid supplied from the working-fluid supply opening or a normal acting valve in which the valve body is closed by the working fluid supplied from the working-fluid supply opening.
According to the written opinion of the International Search Authority, original claim 9 was indicated as being allowable in that it meet the criteria for "Novelty" and "Inventive Step".
Therefore, concerning amended claim 1, original claim 1 has been defined by the substance of the original claim 9. The amendments to claims 10 and 11 are associated with the cancellation of original claim 9. In claims 10 and 11, the numbers of dependent claims have been changed.
